# EUROPEAN PATENT APPLICATION

(11) **EP 1 659 448 A1**
(43) Date of publication of application: **24.05.2006**
(21) Application number: 04772181.6
(22) Date of filing: 19.08.2004
(51) Int. Cl.: G03B 21/16

(54) **PROJECTION DISPLAY DEVICE**

(30) Priority: 21.08.2003 JP 2003208301
(71) Applicant: SONY CORPORATION, Tokyo 141-0001 (JP); Sony Espana SA, 08028 Barcelona (ES)
(72) Inventor: TAKEZAWA, Hiroyuki, c/o Sony Corporation, Tokyo 141-0001 (JP); MURAI, Yukio, c/o Sony Espana S.A. Barcelona, 08232 Barcerona (ES)
(74) Representative: Körber, Martin Hans
(86) International application number: PCT/JP2004/012225
(87) International publication number: WO 2005/024509

(57) **Abstract**

A projection type display apparatus employing a liquid-cooled cathode-ray tube apparatus that copes with the leakage of cooling liquid is provided.

A projection type display apparatus 101 employs a liquid-cooled cathode-ray tube apparatus 102 provided with liquid-cooling means 202 in which cooling liquid 14 to cool the front panel 201a of a cathode-ray tube 201 is sealed; and a tray 23 is provided on the lower side of the liquid-cooling means 202 in the liquid-cooled cathode-ray tube apparatus 102 to prevent the leaked cooling liquid 14 from dripping onto a circuit board, a high-voltage wiring 27 and the like.

## Description

### TECHNICAL FIELD

The present invention relates to a projection type display apparatus employing a liquid-cooled cathode-ray tube apparatus in which liquid-cooling means for cooling the front panel of a cathode-ray tube is installed.

### BACKGROUND ART

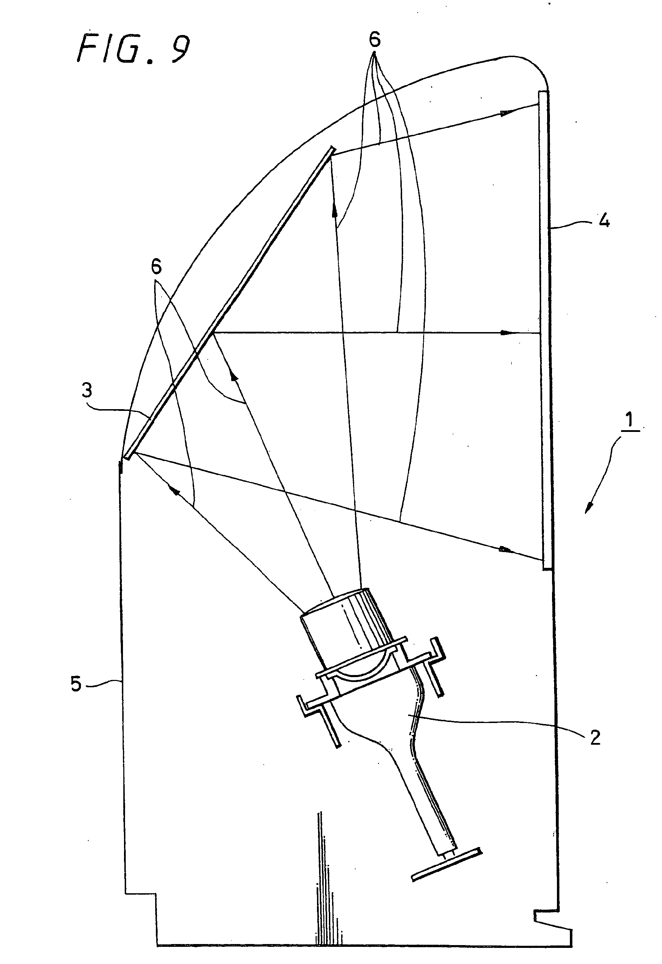

In the past, a projection type display apparatus employing a liquid-cooled cathode-ray tube apparatus in which liquid-cooling means for cooling the front panel of a cathode-ray tube to obtain a large picture screen has been proposed. For example, such projection type display apparatus is, as shown in FIG. 9, an integrated type in which a screen and a liquid-cooled cathode-ray tube apparatus are integrally provided.

In FIG. 9, a reference numeral 1 denotes a projection type display apparatus in which a screen 4 is fixed into the upper front surface in a cabinet 5, a reflection mirror 3 is disposed on the upper rear surface in the cabinet 5 at a position opposing the screen 4, and a liquid-cooled cathode-ray tube apparatus 2 is disposed as a projection tube to oppose the surface of the reflection mirror 3.

Projection light 6 projected from the liquid-cooled cathode-ray tube apparatus 2 is reflected by the reflection mirror 3 and enters the screen 4 to project a predetermined picture, as a result, a large projected screen can be seen from the front surface of the screen 4.

An example of the liquid-cooled cathode-ray tube apparatus 2 employed in such projection type display apparatus is disclosed in Patent Literature 1. In the liquid-cooled cathode-ray tube apparatus for projection that is disclosed in Patent Literature 1, liquid-cooling means is installed on the front surface of the cathode-ray tube and cooling-liquid is sealed in the liquid-cooling means, in which a bellofram of a valve provided in the liquid-cooling means for regulating pressure of the cooling liquid is made of a composite of synthetic rubber members of two kinds to cope with the decrease in the cooling liquid from the bellofram and to cope with the liquid leakage due to a crack caused by bending stress on the bellofram.

### [Patent Literature]

Published Japanese Patent Application H10-302679 (page 2, FIG. 1)

### DISCLOSURE OF THE INVENTION

However, when the composite bellofram of synthetic rubber members of two kinds disclosed in Patent Literature 1 is used, there still occurs an inconvenience of liquid leakage, though only the amount of exudation, caused by the damage to the bellofram which swells and shrinks repeatedly due to the expansion and reduction of the cooling liquid accompanying the operation and stop or the like of a cathode-ray tube. Further, since the cooling liquid is a mixture of glycerin and ethylene glycol or the like and not easily evaporates, leaked cooling liquid may drip down in a gap between installed components, run down along wire rods or the like, and drip onto a lower circuit substrate, high-voltage wiring and the like to possibly cause various kinds of inconvenience.

In light of the above, the present invention is to prevent the occurrence of various kinds of inconvenience even if the liquid leakage occurs in a liquid-cooled cathode-ray tube apparatus.

A projection type display apparatus according to the present invention is the projection type display apparatus employing a liquid-cooled cathode-ray tube apparatus provided with liquid-cooling means in which cooling liquid to cool the front panel of the cathode-ray tube is sealed, wherein a tray is provided on the lower side of the liquid-cooling means in the liquid-cooled cathode-ray tube apparatus.

According to the present invention, since the tray is provided on the lower side of the liquid-cooling means in the liquid-cooled cathode-ray tube apparatus, the leaked cooling liquid is received by the tray to be prevented from dripping down in a gap between components and from dripping along the wiring rods onto the lower circuit board and high voltage wiring, so that various kinds of inconvenience are prevented.

### BRIEF DESCRIPTION OF DRAWINGS

FIG. 1 is a schematic view of a projection type display apparatus according to an embodiment of the present invention;
FIG. 2 is a rear-side perspective view of an example of a projection type display apparatus;
FIG. 3 is an outer perspective view showing a relevant part of a projection type display apparatus according to an embodiment of the present invention;
FIGS. 4A and 4B show an example of a liquid-cooled cathode-ray tube, in which FIG. 4A is a sectional view and FIG. 4B is a perspective view;
FIG. 5 is a partly-enlarged perspective view of FIG. 3 shown in the direction of an arrow mark M;
FIG. 6 is a constitutional view showing a relationship between the liquid-cooled cathode-ray tube that is an example of FIG. 3 and a tray;
FIGS. 7A and 7B show an example of the tray, in which FIG. 7A is a downward perspective view and FIG. 7B is a upward perspective view;
FIG. 8 is a partly enlarged perspective view of FIG. 3 shown in the direction of an arrow mark N; and
FIG. 9 is a schematic view showing an example of a projection type display apparatus in related art.

### BEST MODE FOR CARRYING OUT THE INVENTION

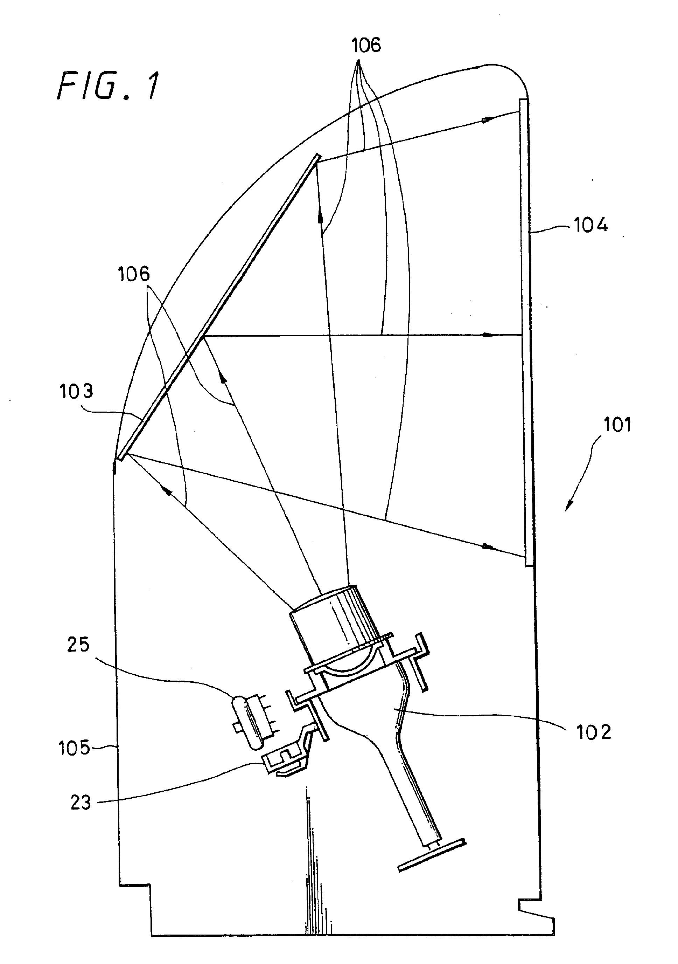

Hereinafter, a projection type display apparatus according to an embodiment of the present invention will be explained referring to FIGS. 1 through 8.

A projection type display apparatus 101 according to an embodiment of the present invention is constructed as shown in a schematic view of FIG. 1. In FIG. 1, a screen 104 is fixed into the upper front surface in a cabinet 105 and a reflection mirror 103 is disposed on the upper rear surface in the cabinet 5 at a position opposing the screen 104. Further, a liquid-cooled cathode-ray tube apparatus 102 is disposed as a projection tube to oppose the surface of the reflection mirror 103.

As the projection type display apparatus 101, projection light 6 projected from the liquid-cooled cathode-ray tube apparatus 102 is reflected by the reflection mirror 103 and enters the screen 104 to project a predetermined picture, as a result, a projected screen can be seen from the front surface of the screen 104.

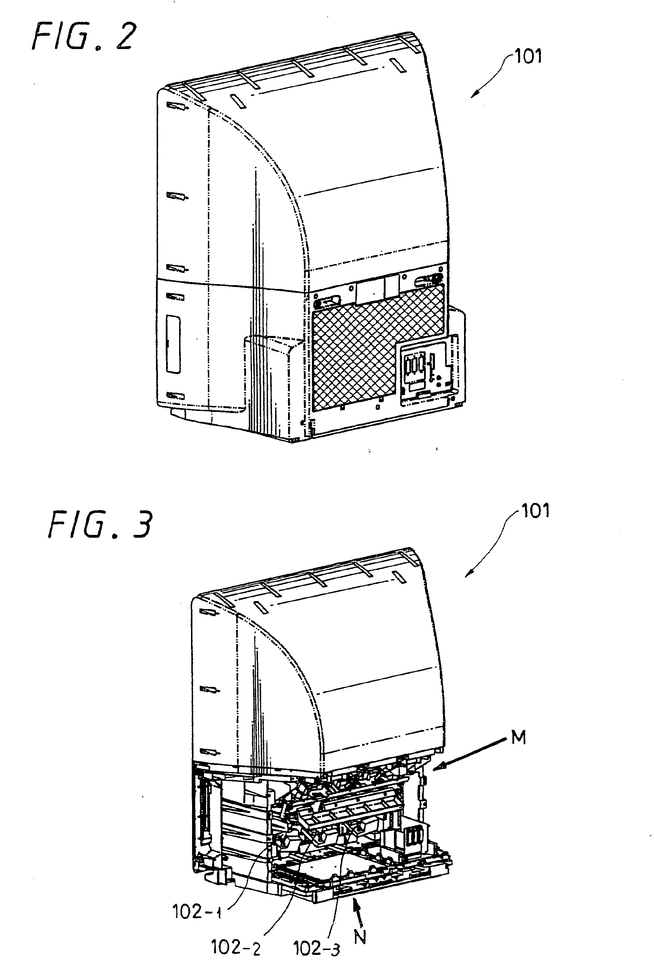

FIG. 2 is the whole outer perspective view of the projection type display apparatus 101 of this embodiment shown from the rear side. FIG. 3 is the whole outer perspective view shown from the rear side, in which the lower external plate is removed from the cabinet 105, and various circuit boards, connectors, three sets of liquid-cooled cathode-ray tube apparatuses 102-1, 102-2, 102-3 and the like are provided in the lower part. Hereupon, the three sets of liquid-cooled cathode-ray tube apparatuses 102-1, 102-2, 102-3 are mounted to be inclined in the direction of the reflection mirror 103.

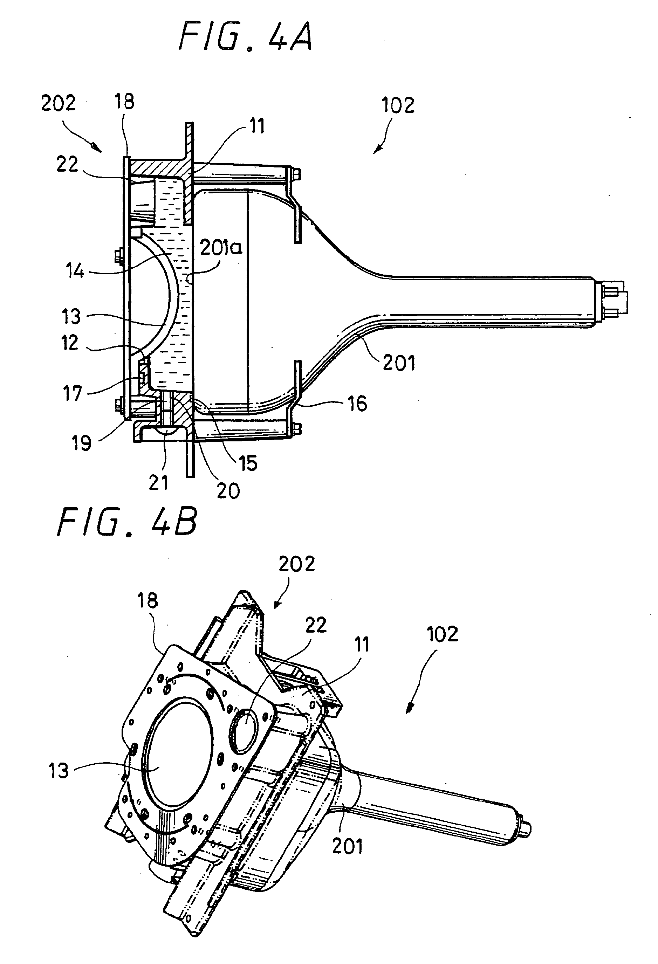

FIG. 4A shows a sectional view of the liquid-cooled cathode-ray tube apparatus 102 used in this embodiment and FIG. 4B shows a perspective view of the liquid-cooled cathode-ray tube apparatus 102 used in this embodiment. The liquid-cooled cathode-ray tube apparatus 102 includes a cathode-ray tube 201, liquid-cooling means 202 and a projection lens 203 not shown in the figure installed in front of the liquid-cooling means 202.

In order to cool the front panel 201a of the cathode-ray tube 201, the liquid-cooling means 202 includes: a coupler 11 which is a cooling-liquid sealing member and is fixed on the front panel 201a side, a lens 13 which is the last lens of the projection lens system and is adhered to an opening 12, which opposes the front panel 201a, of the coupler 11 and a cooling liquid 14 injected into a space surrounded by the front panel 201a of the cathode-ray tube body 201, the coupler 11 and the last lens 13.

The coupler 11 adhered to the front panel 201a with a gasket 15 in between is fixed to the cathode-ray tube body 201 by a fixed spring 16. The last lens 13 adhered to the coupler 11 with a gasket 17 in between is fixed to the coupler 11 by a lens fixing plate 18. A liquid injection opening 19 is provided in the coupler 11, and the cooling liquid 14 is injected into the coupler 11 through the liquid injection opening 19 to be filled.

In the liquid injection opening 19, a screw portion (male screw) 20 is formed inside and after injecting the cooling liquid 14 through the liquid injection opening 19, the liquid injection opening 19 is sealed by a sealing screw 21 through an O ring that is a sealing member.

On the other hand, on the front side of the coupler 11 is provided a pressure regulating valve, that is, a bellofram 22 to regulate the pressure of the cooling liquid 14. The bellofram 22 is conventionally formed of a film made of ethylene propylene rubber (EPDM), a compound of ethylene propylene rubber and silicon, or isobutylene-isoprene rubber (IIR). Depending on the state of volume of the cooling liquid caused by the temperature change, the bellofram 22 will be in an equilibrium state, in a state of swelling on the outside air side and in a state of denting on the cooling liquid side. Accordingly, the pressure of the cooling liquid is regulated.

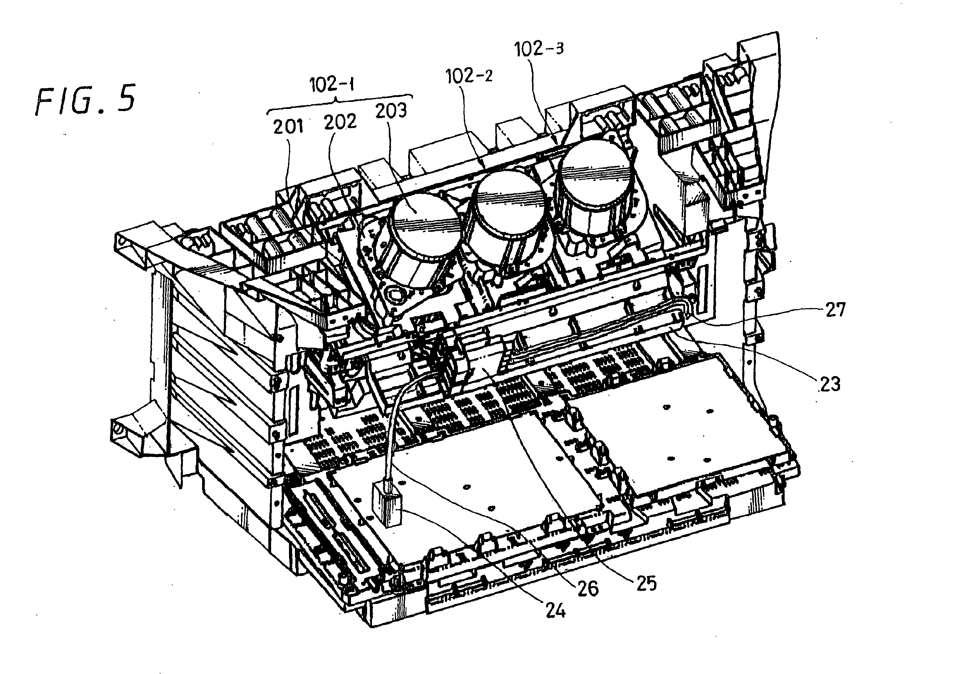

In this embodiment, as shown in FIGS. 3 and 5 (a perspective view shown in the direction of an arrow mark in FIG. 3), a tray 23 is provided on the lower side of the liquid-cooling means 202 of the liquid-cooled cathode-ray tube apparatuses 102-1, 102-2, 102-3. In FIG. 5, the liquid-cooled cathode-ray tube 102-1 includes the cathode-ray tube 201, the liquid-cooling means 202 and the projection lens 203, and each of the other liquid-cooled cathode-ray tubes 102-2, 102-3 has a similar structure. A flyback transformer 24 and a high-voltage block 25 are connected by a high-voltage wiring, and the high-voltage block and each anode not shown of cathode-ray tubes 201 are connected by a high-voltage wiring 27.

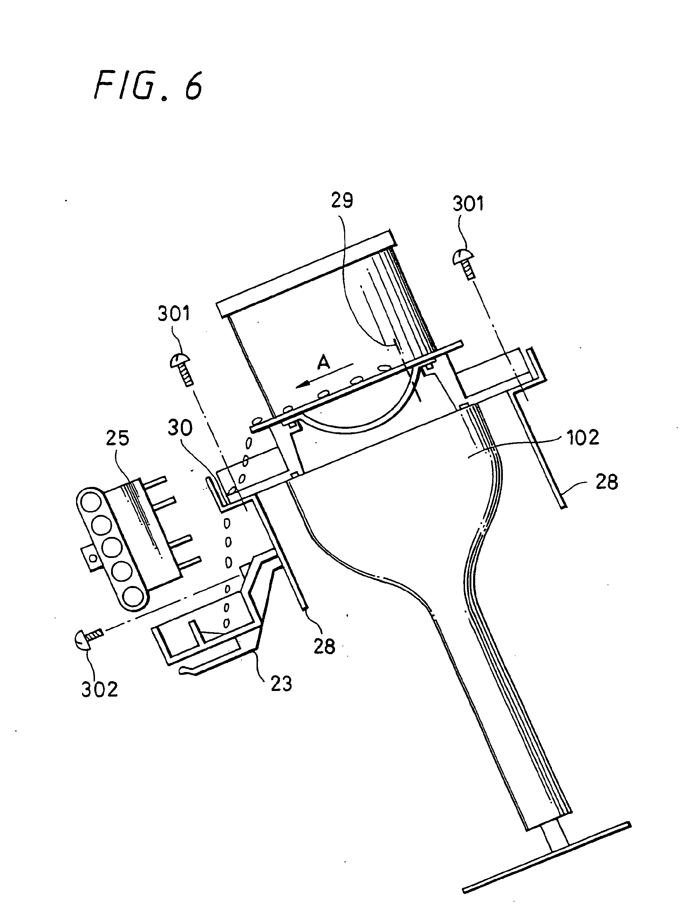

The relation between the liquid-cooled cathode-ray tube apparatus 102 and the tray 23 is also shown in FIG. 1, and FIG. 6 is a detailed view thereof. In FIG. 6, the liquid-cooled cathode-ray tube 102 is attached by means of a screw 302 to an attachment 28 provided in a predetermined position of the projection type display apparatus 101. The tray 23 is also attached to the attachment 28 by means of a screw 302. The high-voltage block 25 is attached to the attachment 28 through attaching means not shown in the figure. A reference numeral 29 shows a position of the bellofram 22 and when the bellofram 22 is damaged, the cooling liquid exuding from the bellofram 22 flows in the direction shown by an arrow mark A and drips onto the tray 23 through a drain hole 30 provided on the corner of the attachment 28.

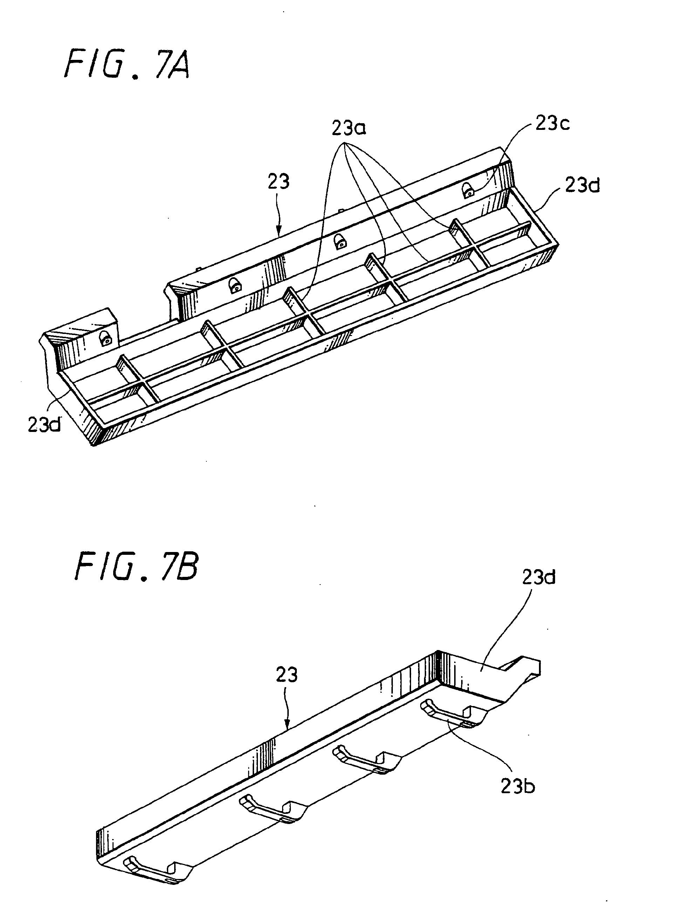

As shown in FIG. 7A, the tray 23 has an approximately rectangular box shape made of insulative plastic or the like, whose length in the longitudinal direction is made longer than the total width of the installed liquid-cooled cathode-ray tube apparatuses 102-1, 102-2, 102-3, as shown in FIG. 5.

Further, ribs 23a are provided on the upper side surface of the tray 23 to divide the tray into two rows in the longitudinal direction and to divide each row into six pieces of squares, in which the height of the ribs 23a is made lower than the side wall 23d of the tray 23.

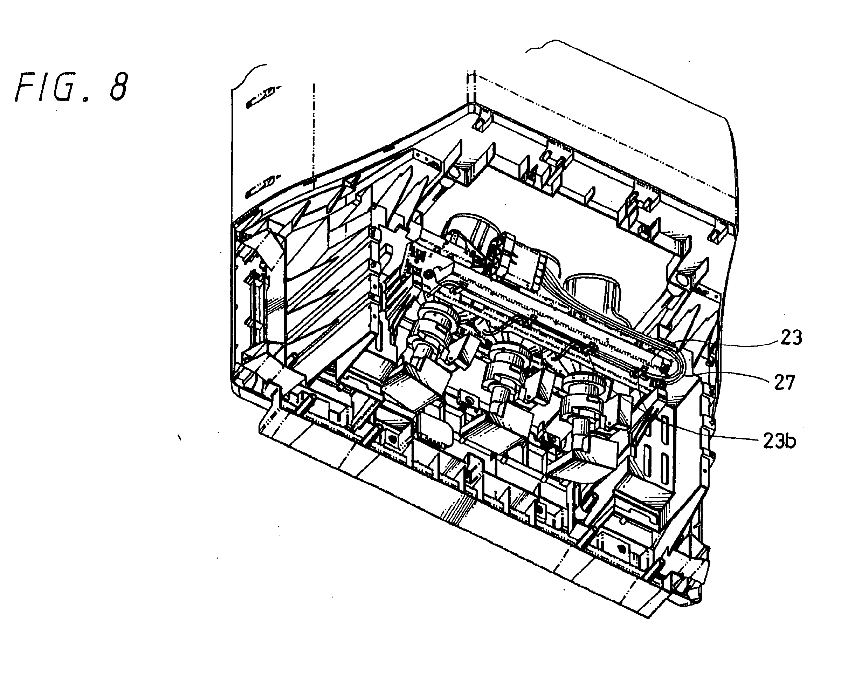

Further, as shown in FIG. 7B, on the lower side surface of the tray 23 are provided four hooks 23b in the longitudinal direction at regular intervals. Then, as shown in FIG. 8 (an enlarged perspective view shown in the direction of an arrow mark N in FIG. 3), the high-voltage wiring 27 is supported by the hooks 23b provided on the lower side surface of the tray 23. Hereupon, in order for the cooling liquid 14 not to drip directly onto the high-voltage wiring 27, the tray 23 serves as eaves.

Further, on the upper side of the tray 23 are provided four screw-receiving holes 23c at approximately regular intervals to fix the tray to the attachment 28, as shown in FIG. 7A. In addition, those ribs 23a and screw-receiving holes 23c on the upper side surface and the four hooks 23b on the lower side surface are integrally formed.

Since the embodiment of the present invention has a structure as described above, when the cooling liquid 14 leaks from the liquid-cooling means 202 in the liquid-cooled cathode-ray tube apparatuses 102-1, 102-2, 102-3, the cooling-liquid 14 is received by the tray 23 provided on the lower side of the liquid-cooling means 202 and is prevented from dripping into gaps between the installed components and from dripping along the wiring rods onto the lower circuit board, high voltage wiring 27 and the like. Further, since the ribs 23a are provided in the tray 23 to divide the tray into squares, the cooling liquid 14 can be held by a principle of constructing a dam.

Specifically, first the leaked cooling liquid 14 enters the squares in the first row in the two rows provided in the longitudinal direction of the tray 23, which is on the upper side closer to the liquid-cooling means 202, and when the leaked cooling liquid fills the squares to overflow, the leaked cooling liquid is pooled in the squares in the lower second row. Accordingly, the cooling liquid 14 is prevented from exuding into and dripping onto a circuit board in the apparatus.

Furthermore, the effectiveness in preventing the leakage of the liquid can be improved when a material absorbing liquid is disposed in each of the divided squares. Furthermore, whether the liquid leakage has occurred or not may be confirmed by providing a liquid-leakage detecting sensor inside the tray 23.

Moreover, according to this embodiment, since the high-voltage wiring 27 such as power-feeding wiring to the anode (not shown in the figures) of the cathode-ray tube 201 is supported by and extends through the hooks 23b provided on the lower side surface of the tray 23, the tray 23 functions as eaves and the cooling liquid 14 can be prevented from dripping directly onto the high-voltage wiring 27, from dripping along the high-voltage wiring 27 and reaching electrical components, and from dripping onto a circuit board, even if the leaked cooling liquid is scattered.

As described above, even if the liquid leakage actually occurs, in the case where the amount of the leakage is small and no accretion exists on the circuit board, longer operating life of the projection type display apparatus 101 can be expected, because in general no problem actually occurs for the use.

Further, the present invention is not limited to the above described embodiment, and various changes and modifications could be effected without departing from the gist thereof.

### DESCRIPTION OF REFERENCE NUMERALS

- 14...: COOLING LIQUID
- 23...: TRAY
- 27...: HIGH-VOLTAGE WIRING
- 102...: LIQUID-COOLED CATHODE-RAY TUBE APPARATUS
- 103...: REFLECTION MIRROR
- 104...: SCREEN
- 201...: CATHODE-RAY TUBE
- 201a...: FRONT PANEL
- 202...: LIQUID-COOLING MEANS

## Claims

1. A projection type display apparatus employing a liquid-cooled cathode-ray tube apparatus provided with liquid-cooling means in which cooling liquid to cool the front panel of a cathode-ray tube is sealed, comprising:
a tray provided on the lower side of said liquid-cooling means in said liquid-cooled cathode-ray tube apparatus.

2. A projection type display apparatus according to claim 1, wherein
ribs are provided on the upper side surface of said tray and the tray is divided into squares by the ribs.

3. A projection type display apparatus according to claim 1 or 2, wherein
hooks are provided on the lower side surface of said tray and high-voltage wiring is supported by the hooks.
